# EUROPEAN PATENT SPECIFICATION

(11) **EP 1 600 213 B1**
(45) Date of publication and mention of the grant of the patent: **02.05.2012**
(21) Application number: 05104322.2
(22) Date of filing: 20.05.2005
(51) Int. Cl.: B01L 3/00, C12Q 1/68

(54) **Apparatus with microtiter plate format for multiplexed arraying**
Vorrichtung in Form einer Mikrotiterplatte zum multiplexierten Array
Dispositif avec le format d'une plaque de microtitrage pour matrices multiplexées

(30) Priority: 21.05.2004 US 572971 P
(43) Date of publication of application: 30.11.2005
(73) Proprietor: Schott AG, 55122 Mainz (DE)
(72) Inventor: Haines, Dan, 18436, Lake Ariel, PA (US); Conzone, Samuel D., 18411, Clarks Summit, PA (US); Redkar, Rajendra R., 18411, Clarks Summit, PA (US); Granko, Joseph J., 18518, Old Forge, PA (US)
(74) Representative: Schnabel, Jörg

(56) References cited:
- WO-A-99/55826
- WO-A-02/055197
- WO-A-02/099417
- WO-A-03/092892
- DE-A1- 10 214 250
- US-A- 6 037 168
- US-A1- 2002 031 449
- US-A1- 2003 026 739
- US-A1- 2003 032 076
- US-A1- 2004 020 595

## Description

The present invention relates generally to an apparatus in the microtiter plate format for improved multiplexed microarraying as defined in claim 1. The apparatus overcomes current limitations with conventional polymeric and glass bottom microtiter plates. The invention also relates to an apparatus for conducting multiple biomolecular assays comprising a low self-fluorescent coated substrate having an upper and lower surface. The substrate upper surface has a plurality of wells and a flexible superstructure having a plurality of through holes (i.e. openings) in a pattern that is similar to and aligns with the wells on the substrate and is removably adherable to the upper surface of the substrate. The superstructure is adhesively attachable to the substrate. More preferably the adhesive is strategically recessed on the underside of the flexible superstructure from about 0.15 mm to 0.50 mm from all well openings. Most preferably, a tray supports the substrate and the superstructure. In a preferred embodiment the substrate is low self-fluorescent glass and coated on the upper surface with a functional coating to which other biomolecules can bond.

The invention also relates to a kit according to claim 17 for conducting multiple biomolecule assays comprising a low self-fluorescent coated substrate having an upper surface comprising a plurality of wells for conducting biomolecular assays and a flexible superstructure removably adherable on its underside to the substrate upper surface. The superstructure has a plurality of openings there through which align with the wells on the upper surface of the coated substrate. The kit includes a tray for supporting the substrate.

The invention also relates to a method for conducting biomolecular assays according to claim 27.

### Background

The emergence of multiplexed microarraying in the microtiter plate format has been inhibited from widespread acceptance due to technical limitations. Conventional microarray fabrication has not been successfully interfaced with conventional microtiter plate designs, thus the bulk of multiplexed microarraying occurs on microscope sized coated substrates in various formats. At present the primary limitations include difficulties associated with contact pin or inkjet printing of microarrays into conventional 2 - 13 mm recessed microtiter plate wells, and the inability to print the entire intra-well surface with microarray probes due to adhesive contamination.

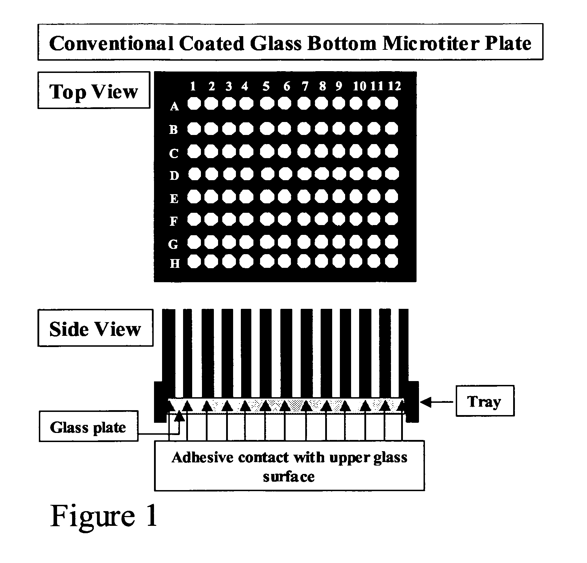

The typical microarray assay allows hybridization of a unique probe set printed on a slide with a complex mixture of targets to determine biological mutation (variation) or abundance of genetic response as a function of stimulus/environment. However, the open format of the standard microarray dictates the target solution be applied to the whole array surface. Multiplexed microarraying allows multiple target solutions to be applied to individual probe sets by segregating the probe sets from one another by wells. The conventional microtiter plate format is suitable for multiplexed microarraying but the current designs and apparatus need improvement for full utilization of the microtiter plate. Microtiter plates, used in many scientific disciplines for assaying, drug discovery, purification, combinatorial chemistry, etc., are generally not suitable for microarraying due to difficulty in applying the wide range of functional coatings used in microarraying to the polymeric microtiter plate. Additionally, conventional microtiter plates suffer from issues of lack of optical transparency and flatness issues associated with the wells. This leads to problems with fluorescence detection. Modifications have been made, specifically the introduction of glass-bottom microtiter plate designs, for multiplexed microarraying. However, these still are not optimized for microarraying as the full well area cannot be used for printing probes as opposed to the comparable well area on a standard, coated glass substrate due to the well wall thickness and finite thickness of the pins used to deposit probes. Due to the well height of the typical microtiter plate and the longer z-axis travel time for well-to-well probe deposition the printing of microarray probes is difficult and time consuming. Prior art glass-bottom microtiter plates are typically prepared by gluing a plastic microtiter plate shell onto a flat glass substrate. Such gluing often results in intra-well adhesive contamination, which can deleteriously affect microarray fabrication, and inevitably microarray performance. Figure 1 shows the design for a conventional glass bottom microtiter plate.

These limitations can be circumvented by utilizing an apparatus of the present invention, which consists of a coated and patterned substrate having a removably attachable flexible superstructure with a matrix of openings which correspond to the pattern of wells on the substrate, and optionally a tray which supports the coated and patterned substrate and provides for alignment of the flexible superstructure over the pattern of wells.

Examples of prior art apparatus and methods for multiplexed microarrays are disclosed in US 2003/0032076 A1, US 2003/0026739 A1, and US 2002/0031449 A1.

### SUMMARY OF THE INVENTION

The present invention relates generally to an apparatus as defined in claim 1 and kit as defined in claim 17. in the microtiter plate format for improved multiplexed microarraying. The apparatus overcomes the fore mentioned current limitations with conventional polymeric and glass bottom microtiter plates. The apparatus for conducting multiple biomolecular assays comprises a low self-fluorescent coated substrate having an upper and lower surface. The substrate upper surface has a pattern comprising a plurality of wells. A flexible superstructure having a plurality of through holes (i.e. openings) in a pattern that is similar to and aligns with the wells on the substrate is removably adherable to the upper surface of the substrate. The superstructure is adhesively attachable to the substrate. More preferably, a tray supports the substrate and the superstructure and acts as an alignment jig. In a preferred embodiment the substrate is low self-fluorescent glass and coated on the upper surface with a functional coating to which other biomolecules can bond.

A more complete appreciation of the invention will be readily obtained by reference to the accompanying drawings, wherein:

### BRIEF DESCRIPTION OF THE DRAWINGS

Figure 1 depicts a conventional prior art glass bottom microtiter plate.
Figure 2 depicts the elimination of well contamination achieved by reducing the amount of adhesive on a flexible superstructure placed around the wells of an epoxy silanized patterned glass substrate. In this embodiment adhesive is placed on the underside of the flexible superstructure about 0.25 mm from all well openings.
Figure 3 depicts a coated patterned glass substrate adhesively adhered on the upper side of the substrate to the inner peripheral recess of a support tray (dimensions in mm).
Figure 4 shows the lower surface of a coated patterned glass substrate adhered to the inner peripheral ledge of a support tray without adhesive (dimensions in mm). Optionally, adhesive may be used with the design.
Figure 5 compares a conventional microtiter plate (top) with an embodiment of the present invention (bottom). The differences in printable substrate area between the conventional plate and the present invention can be seen. Depicts the shorter z-axis travel time for well to well printing in the embodiment of the present invention.
Figure 6 shows the well contamination by adhesive in commercially available glass bottom microtiter plates.
Figure 7 depicts a support tray with an inside perimeter ledge having openings for the injection of adhesive.
Figure 8 shows the SBS conforming microtiter 96 well plate footprint reproduced from "ANSI/SBS 1-2004 Microplates - Footprint Dimensions Version 1/9/04".
Figure 9 shows three tool embodiments for use in aligning and/or mating the glass substrate to the tray and superstructure to the glass substrate.
Figure 10 demonstrates the application flexibility of the various embodiments of the present invention for processing (microarray) assays.
Figure 11 depicts a support tray with an inside perimeter ledge having openings cut for the insertion of pins at the perimeter of the upper surface of the substrate plate to provide mated attachment of the plate to the tray.
Figure 12 depicts a support tray with an inside perimeter ledge having openings cut for the insertion of an o-ring over a portion of the upper surface of the substrate plate. The o-rings provide mated attachment of the plate to the tray via downward force.
Figure 13 pictorially compares the flatness of a glass substrate plate to the flatness of a glass substrate plate as used in various embodiments of the present invention:
   a) a glass substrate plate,
   b) a glass substrate plated mated to a tray by an adhesive gasket (see Figure 7 embodiment),
   c) a glass substrate plate mated to a tray by 4 corner pins made from the same material as the tray with a pin-stock length less than the distance from the top surface of the tray to the top surface of the glass plate (see Figure 11 embodiment) and
   d) a glass substrate plate mated to the tray by an o-ring (see Figure 12 embodiment).

### DETAILED DESCRIPTION

The substrate is chosen to be compatible with current microarray detection methods. As mentioned above, the substrates for use in biomolecular arrays provide physical support and structure to the associated biomolecules such as oligonucleotides and/or polynucleotides present thereon under the assay conditions in which the array is employed, particularly under high throughput handling conditions. Although a variety of substrates are contemplated, the preferred substrate is a low self-fluorescent glass, for example borosilicate or soda lime silicate glass among others. Most preferably the glass substrate is a low self-fluorescence multi-component oxide silicate glass. Suitable such glasses include borosilicate, soda-lime silicate or a low self-fluorescent synthetic fused silica. These low self-fluorescent glasses are obtained using extremely pure raw materials in the melting process and thus avoid the incorporation of problematic transition metal ions and rare earth metal ions into the glass structure. Most preferably, the low self-fluorescence solid support is fashioned as a rectangular flat slide. Suitable substrates have a thickness of about 1 mm and are about 74 mm wide by 110 mm long. Glass is a preferred substrate due to its useful properties for microarraying e.g. chemical durability, low inherent fluorescence in the 500 - 800 nm range, non-porous surface, rigidity, flatness, and optical transparency etc. Glass is also amenable to a wide variety of surface modifications such that many different coating chemistries/surface modification chemistries can be successfully employed. Additional suitable substrates are found in US 2003/0054176 A1.

Providing a substrate with a functional coating enables biomolecules to be attached to the surface, a prerequisite for conducting microarrays. The coating on the substrate is chosen to provide functionalized surfaces for the attachment of biomolecules or biomolecularly relevant compounds. The functional coatings can be continuous or discontinuous coatings. Often the chemically functional coating layer will be a monolayer. A monolayer coating is defined herein as an organic, inorganic, or organometallic film that is formed on a substrate surface, whereby the film thickness is similar to the molecular size of the coating precursor. For example, a monolayer organosilane coating on glass typically has a thickness of <5 nm, because a uniform film of silane molecules can be formed on the glass surface by appropriate coating methods, and most functionalized silane molecules have a length of <5 nm. The use of self-assembled monolayers (SAMs) on surfaces for binding and detection of biological molecules has recently been explored. See for example WO98/20162; PCT US98/12430;
PCT US98/12082; PCT US99/01705; PCT/US99/21683; PCT/US99/10104;
PCT/US99/01703; PCT/US00/31233; U.S. Pat. Nos. 5620850; 6197515; 6013459; 6013170;
6065573; and references cited therein. Multilayer and multicomponent coatings are also contemplated. A multilayer coating is defined herein as single or multiple component organic, inorganic or organometallic material(s) that are formed or deposited on a substrate surface, whereby the film thickness is some integer multiple of the molecular size of the starting precursor or precursors. Thus, functional coating layers will generally range in thickness from a monomolecular thickness to about several hundred nanometers. A non-comprehensive listing of potential organosilane coatings can be found, for instance, in the Gelest 2004 Silicon Compounds: Silanes & Silicones catalog. Preferably the substrate is coated with a multiamino organosilane such as N-(2-amino-ethyl)-3-aminopropyl-trimethoxysilane (AEA), N-(2-aminoethyl)-3-aminopropyltrimethoxysilane (EDA), or (aminoethyl aminomethyl)phenethyltrimethoxysilane (PEDA); an epoxysilane such as (3-glycidoxypropyl)trimethoxysilane or 2-(3,4-epoxycyclohexyl)ethyltriethoxysilane); a monoamino organosilane such as 3-aminopropyltrimethoxysilane. Most preferably, the multiamino organosilane is trimethoxysilylpropyl-diethylenetriamine (DETA). Examples of functionalized coatings are found, for example, in US 2003/0054176 A1.

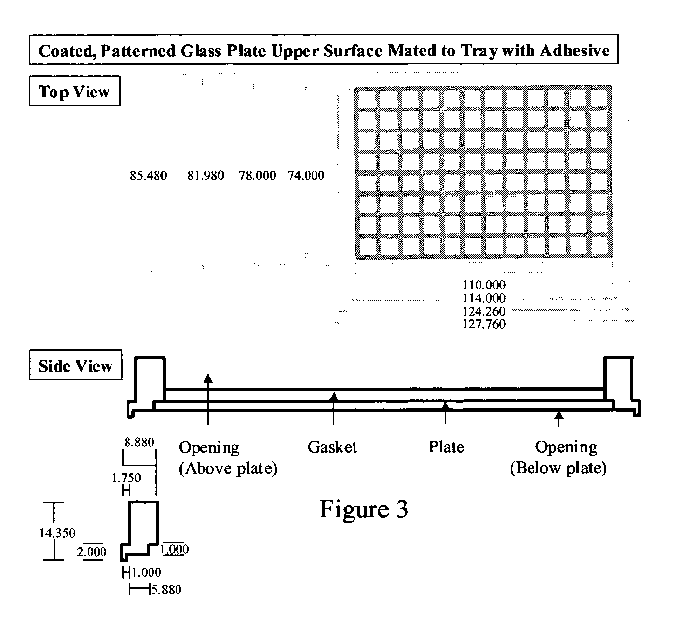

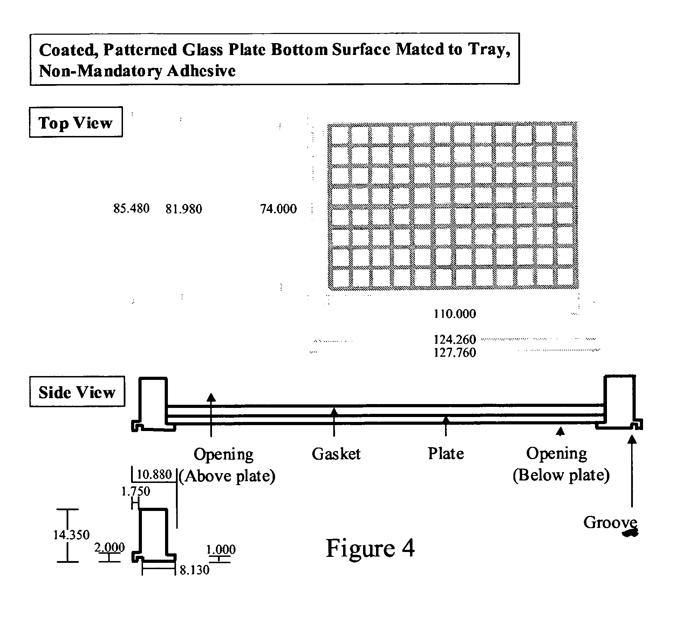

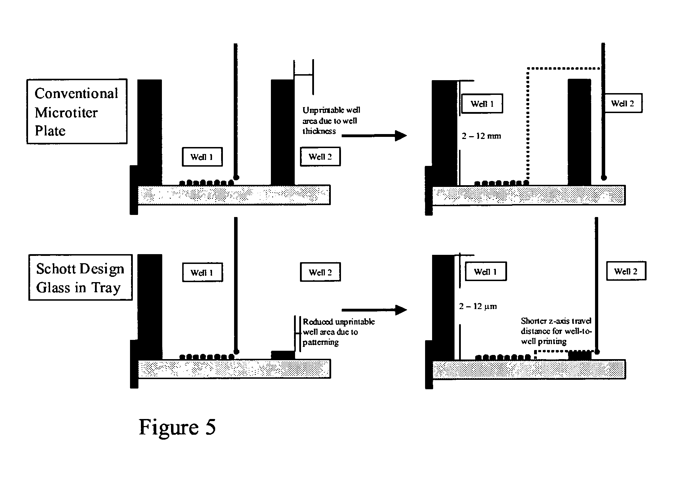

Patterning compositions are used to form hydrophobic boundary regions on a substrate, providing separation between the individual hydrophilic wells. Each well can be used for single or multiple arrays of probes, forming an "array of arrays" a composite array comprising a plurality of individual arrays. The patterning composition can be applied in various well densities to allow processing of multiple assays in parallel rather than serially. The patterning material serves several purposes, one of which is to provide spatially distinct regions on the substrate, which act to prevent cross contamination between arrays. The well pattern also serves as a registration aid for probe deposition and superstructure alignment, and it is hydrophobic to deter intra-well cross contamination. While the wells can take the form of any geometric shape, to maximize the well area for printing and interfacing with the pin printing software, square wells, or square wells with rounded corners, are usually chosen. This is demonstrated pictorially in Figures 3 and 4. The matrix of wells does not have to be geometrical. The wells can take any geometrical shape. The wells can be connected by the pattern design and/or by the superstructure design. The addition of a pattern to the substrate enables a matrix of wells to be spatially defined on the substrate surface, enabling multiple areas for probe deposition to occur. The pattern provides a registration aid for deposition of the probes, reduces intra-well cross contamination due to the hydrophobicity of the pattern, and provides a reproducible surface for the adhesion of a superstructure, irregardless of the coating used for biomolecule attachment. Fiducials can be incorporated in/on the pattern to aid in properly orienting the superstructure to the plate and the subsequent proper orientation of the assembled plate/superstructure to the tray. Fiducials can be additions to the pattern (e.g., lines, arrows or text) or alterations to the pattern (e.g., corner chamfer(s), indentations, edge pattern, dots). Patterning material is generally less then 30 µm thick thus allowing more of the well area to be printed. The pattern supports registration during printing yet does not require excess z-axis travel as is the case with a standard microtiter plate where the well depth typically ranges from 2 - 12 mm. The difference in z-axis travel is shown pictorially in Figure 5. Suitable examples of patterning material can be found, for example, in US 2005/0064209 A1 entitled Low-Fluorescent Chemically Durable Hydrophobic Patterned substrates. Most preferable patterning materials are those of the class disclosed in US 6,037,168; US 5,989,490; US 5,856,894; US 5,503,803 and US 5,200,152.

Additional coatings may be applied to substrate before patterning and before functional coating to give additional desired properties. An example of a desired property would be the enhancement of the fluorescent signal used to determine hybridization bonding of probe and target. One preferred additional coating is that of the type disclosed in German Patent Application 10 2004 013388.3 for the increase of fluorescent signal in a hybridization assay.

The functional coatings on the substrates used in the apparatus of the present invention are useful for attaching molecules having biological activity, i.e., "biomolecules" such as proteins, nucleic acids, lipids, polysaccharides, RNAs, DNAs and derivatives or fragments thereof. Other elements such as viruses, cells, or chemical compounds such as biotin, can also be attached. Biomolecules, particularly nucleic acids, have been immobilized on a variety of solid surfaces, for a number of known applications, including DNA and RNA oligomer synthesis; separation of desired target nucleic acids from mixtures of nucleic acids including RNA; conducting sequence-specific hybridizations to detect desired genetic targets (DNA or RNA); creating affinity columns for mRNA isolation; quantification and purification of PCR reactions; characterization of nucleic acids by AFM and STM; for sequence determination of unknown DNAs, such as the human genome. A number of methods have been employed to attach biomolecules to substrates. There are numerous patents and patent applications, which describe arrays of oligonucleotides and methods for their fabrication, and a variety of substrates for DNA immobilization, including polymeric membranes (nylon, nitrocellulose), magnetic particles, mica, glass or silica, gold, cellulose, and polystyrene, etc. They include: U.S. Pat. Nos. 5,077,210; 5,242,974; 5,384,261; 5,405,783; 5,412,087; 5,424,186; 5,429,807; 5,436,327; 5,445,934; 5,472,672; 5,527,681; 5,529,756; 5,545,531; 5,554,501; 5,556,752; 5,561,071; 5,599,895; 5,624,711; 5,639,603; 5,658,734; 5,677,126; 5,688,642; 5,700,637; 5,744,305; 5,760,130; 5,837,832; 5,843,655; 5,861,242; 5,874,974; 5,885,837; 5,919,626; PCT/US98/26245; WO 93/17126; WO 95/11995; WO 95/35505; EP 742 287; and EP 799 897. There are numerous patents and patent applications describing methods of using arrays in various applications, they include: U.S. Pat. Nos. 5,143,854; 5,288,644; 5,324,633; 5,432,049; 5,470,710; 5,492,806; 5,510,270; 5,525,464; 5,547,839; 5,580,732; 5,661,028; 5,848,659; 5,874,219;WO 95/21265; WO 96/31622; WO 97/10365; WO 97/27317; EP 373203; and EP 785 280. The techniques and uses in these documents are all applicable herein.

Pin spotting and ink jet printing are the most common techniques used to place small volumes (spots) of solution, which contain known DNA fragments (probes), onto a solid support. Probes may be deposited onto the coated and patterned substrate before or after it is mated with the tray. An ideal substrate for DNA microarray applications would have zero self-fluorescence, and would form a strong chemical (covalent) bond with the probes that are pin spotted or ink jet printed into the well areas on the substrate surface. After covalent bonding is achieved, the probe/coated substrate interactions should be strong enough to survive washing with mild detergents and/or immersion in boiling H₂O. Such strong covalent bonding is desirable for DNA microarray applications, since it is often vital that the probes are immobilized on the solid support, and that they remain immobilized at a known location after various hybridization and cleaning steps.

With an automated delivery system, such as a Hamilton robot (e.g., Hamilton 2200 pipeting robot (Hamilton, Inc., Reno, Nev.)) or ink-jet printing method, it is possible to form a complex array of nucleic acid probes (e.g., DNA and/or oligonucleotide probes) on a solid support, in particular onto derivatized coated and patterned solid substrates. Such methods can deliver nano to pico-liter size droplets with sub-millimeter spacing. Because the droplets are well defined on such a hydrophobic surface, it is possible to create an array with a high density of nucleic acid probes (e.g., DNA and/or oligonucleotide probes). Thus, it is possible to create arrays having greater than about 10,000 probe droplets/cm ². Such arrays can be assembled through the use of a robotic liquid dispenser (such as an ink-jet printing device controlled by a piezoelectric droplet generator). Methods and apparatuses for dispensing small amount of fluids using such ink-jet printing techniques and piezoelectric ink-jet depositions have been previously described by Wallace et al. (U.S. Pat. No. 4,812,856), Hayes et al. (U.S. Pat. No. 5,053,100). The array can also be created by means of a "gene pen". A "gene pen" refers to a mechanical apparatus comprising a reservoir for a reagent solution connected to a printing tip. The printing tip further comprises a means for mechanically controlling the solution flow. A multiplicity of "gene pens" or printing tips may be tightly clustered together into an array, with each tip connected to a separate reagent reservoir or discrete "gene pens" may be contained in an indexing turntable and printed individually. Alternatively, the array can be created with a manual delivery system, such as a pipetman. Because these arrays are created with a manual delivery system, these arrays will generally not be as complex as those created with an automated delivery system. Arrays created with a manual delivery system will typically be spaced further apart. Preferably, arrays created with a manual delivery system will be created in a 96-well or 384-well patterned and coated substrate.

A superstructure mated to the coated, patterned substrate allows the available well volume to be increased significantly and acts as a well extension. The extended wells or reaction chambers allow increased well fluid volume. This increased well volume is particularly desirable in the washing steps and allows a much greater volume of reagent to be used as compared to the patterned well area alone. The superstructure should have a matrix of openings for mating to the pattern on the substrate. For some applications, this superstructure may not be necessary, the pattern on the substrate functioning adequately enough for processing of the microarrays. The superstructure is flexible. The superstructure can be made from any standard, conventional gasket material (e.g. flexible silicon, rubber, nitrile, etc.) that can be manufactured to the design tolerances of the tray (rigid polypropylene, polystyrene, polyethylene, acrylic, etc.). Preferably the flexible superstructure is made of a hydrophobic synthetic material, and in particular of silicone rubber. Other suitable elastomeric synthetic materials include, for example, polyvinylchloride with high molecular plasticizers, ethylene-vinylacetate-copolymers, polyurethane-elastomers with varying alcohol-moieties, polyvinylidene-chloride, methyl-rubber or chlorinated rubber and fluorocarbon elastomers. The preferred superstructure material is elastomeric. An elastomeric material gives the superstructure flexibility (non-rigidity), which aids in the sealing of the superstructure to a surface. A flexible or soft material, when used with an adhesive, will form a seal that is more forgiving than a rigid or hard material. The flexible material can conform more easily to the mating surface, thus forming a more uniform and stronger seal based on superstructure-to-mating substrate surface area.

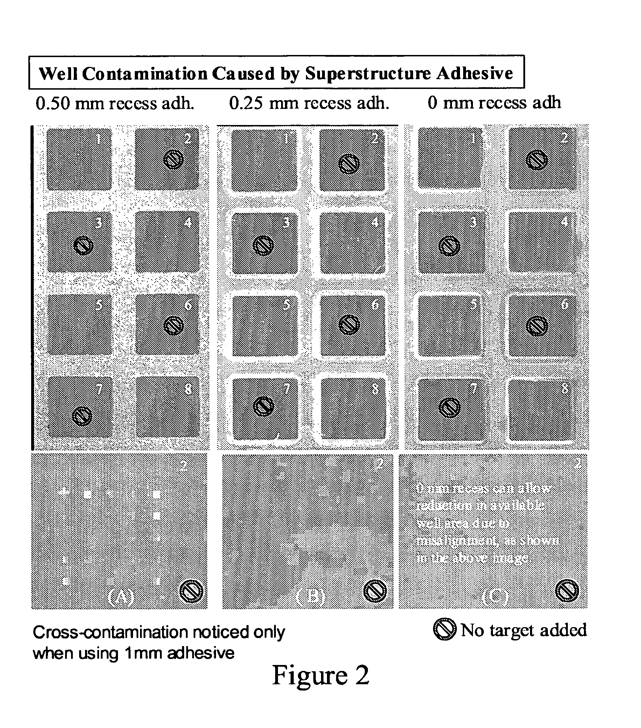

The superstructure can be manufactured by conventional methods (machining, injection molding, casting, etc.). It may be advantageous for some applications for the superstructure to be removable after processing of the microarray. According to the invention the superstructure underside contains an adhesive and the adhesive width is less than that of the wells, preferably up to about 0.5 mm less than the wall width. As shown in Figure 2 the adhesive thickness on the superstructure can be reduced from full intra-well coverage to an amount of adhesive sufficient for maintaining an adequate superstructure-to-glass substrate seal. The optimal amount of adhesive to balance the need for adequate superstructure-to-glass seal vs. no well contamination varies from superstructure design (matrix of wells to matrix of wells) and is determined empirically. Decreasing the amount of adhesive reduces the amount of well contamination, as shown in Figure 2. The superstructure openings (i.e. through holes) may have straight sidewalls or taper towards or away from the coated and patterned substrate, and the height of the wall section or of the chambers, respectively, may range. Unlike conventional glass bottomed microtiter plates, the superstructure can be removed for subsequent analysis at the conclusion of an assay procedure. Moreover, the superstructure may be provided with a sealing material to cover the superstructure wells to minimize solution evaporation (e.g. coverglass, tape-strip-foil with adhesive). The superstructure may be machined or injection molded to have fiducials for orientation with the plate, such as corner chamfer(s), depressions, notches, etc.

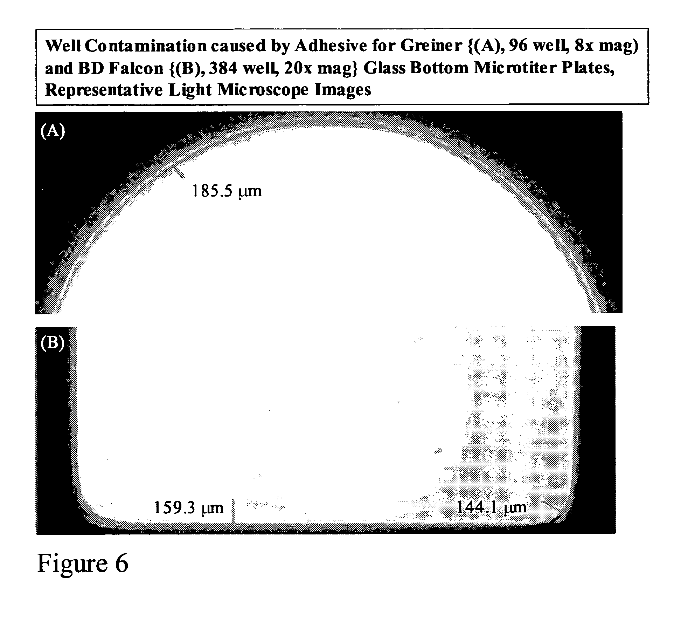

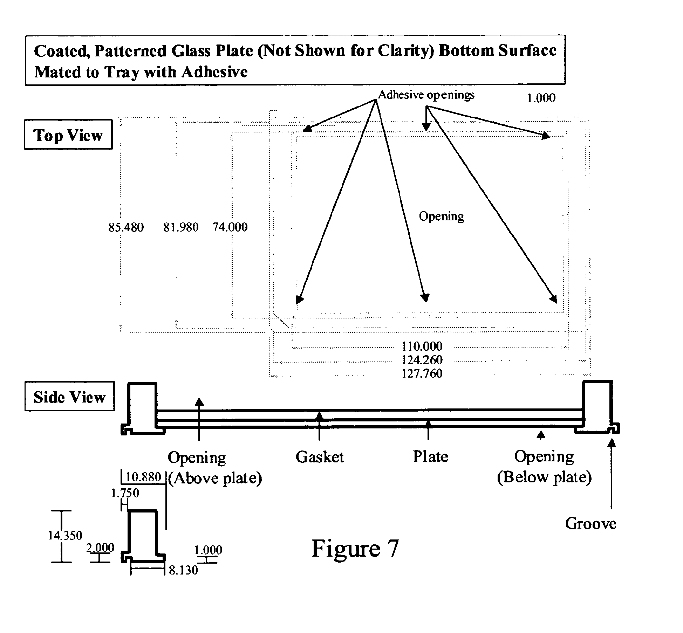

A coated, patterned substrate may be adhered to a tray with adhesive. The tray may mate to the substrate with or without an adhesive. If used with an adhesive, the adhesive is limited to regions removed from the matrix of wells. In Figure 3 the adhesive mates the upper surface of the substrate to a recess in the tray and is on the same side as wells. This design minimizes well contamination by the adhesive since the adhesive is applied only to the outer 2 mm perimeter of the 74 by 110 mm glass plate, the glass plate being patterned with a hydrophobic coating on the outer 4 mm perimeter. This design circumvents the problems observed with glass bottom microtiter plates commercially available by BD Falcon and Greiner, shown in Figure 6, which is the necessity to put adhesive on the upper surface of the glass plate across the entire surface of the plate excluding the wells for sealing the tray to the glass plate. In Figure 4, the adhesive is on the opposite side of the substrate, limiting the potential for well contamination by the adhesive used to attach the substrate to the tray. When an adhesive is used to mate the substrate to the tray or the substrate to the superstructure, the adhesive can be selected from standard, conventional adhesives appropriate for binding the substrates together. These can include UV curable and releasable adhesives, tapes, formulations (liquids, gels), including, but not limited to acrylics, epoxies, inorganics, nitriles, polyesters, polysulfides, polyurethanes, silicones, etc. For liquid or gel adhesive formulations, adhesive placement and volume can be regulated with a tray design of the type shown in Figure 7. The design in Figure 7 differs from the design in Figure 4 by the addition of holes in the tray support ledge of approximately 1 mm diameter for adhesive placement. With regard to the adhesion of the substrate to the tray the type of adhesive used will depend on the tray material. Adhesive chemical classes that may be used with various tray materials include, but are not limited to, acrylics, rubber cements, epoxies, silicones, urethanes, cyanoacrylates, polyethylene/polypropylene ("hot melts"), vinyl acetate, cellulose based, and UV-curable. The adhesives can be cured by any standard method, including, but not limited to, UV-cure, visible light cure, thermal cure, and air cure. Mechanical clamping, mechanical pressure, and vacuum may be used to aid in the set-up or curing of the adhesive. The adhesives may be single step/single component or multiple step/multiple components. Certain types of tray materials, such as polypropylene and polyethylene, may need to be surface treated (oxidation, abrasion, plasma etching, corona treatment) prior to application of the adhesive. A variety of adhesives are commercially available from a number of suppliers.

A few examples of suitable commercially available adhesives include Norland Optical Adhesive 68, 72, 74, 76, 78 (UV-curable), Norland Electronics Adhesives 121, 123 (thermal cure), 3M DP-125, 190 (epoxy), and Three Bond 1700 Series (cyanoacrylate).

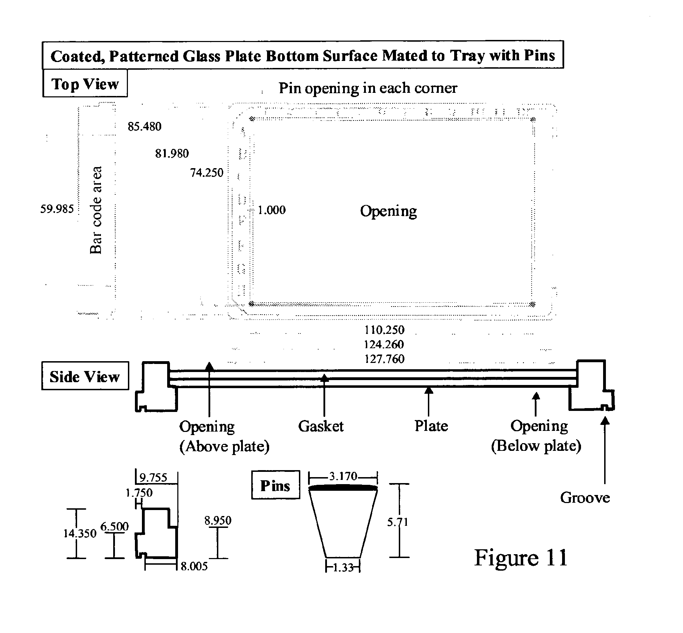

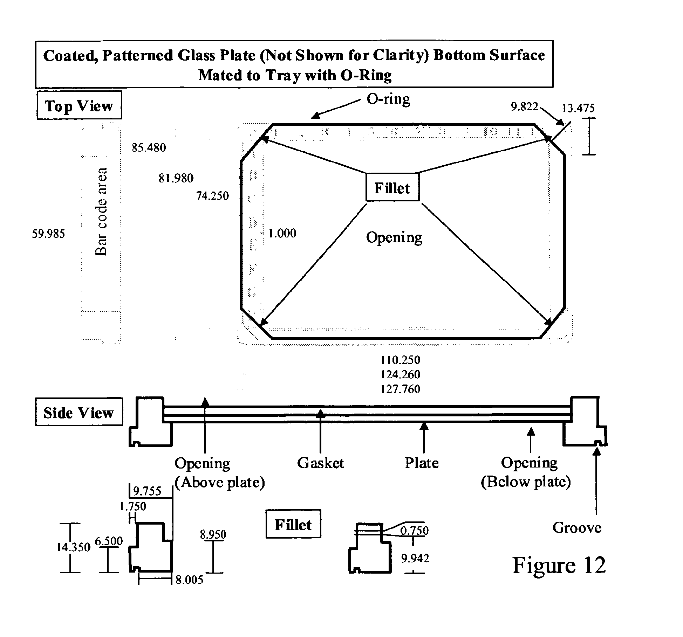

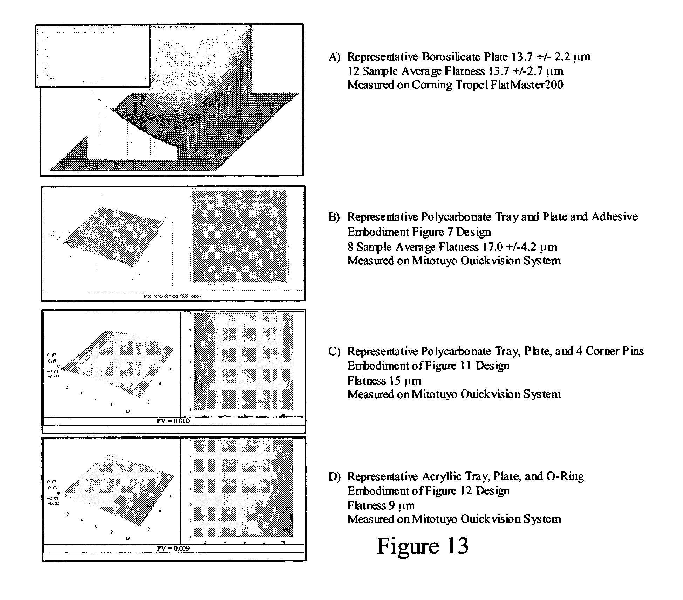

In another preferred embodiment, the substrate plate is mated to the tray without the use of adhesive. Figure 11 demonstrates the use of "pins" or "pin-stock" to keep the substrate plate mated to the tray. The pins are preferably made from the same material as the tray to limit coefficient of thermal expansion mismatch. The pins may be of any appropriate geometry (round, rectangular, tapered, etc.) and may contact the substrate plate at any appropriate angle. The pins can be flush, recessed, or protruding above the top surface of the tray. Preferably the pins are placed at the four corners of the tray. Alternatively, the pins can be located at any location around the perimeter of the substrate plate. The number of pins is preferably 2 or more. In certain embodiments the length of the pins is preferably equal to or less than the distance from the upper surface of the tray to the upper surface of the substrate plate to minimize warp of the substrate plate. In some embodiments the bottom surface of the pins do not necessarily have to touch the upper surface of the plate and/or gasket to keep the plate inside the tray as this configuration will minimize stressing of the plate from the pin/tray assembly, as shown in Figure 13. In another preferred embodiment, o-rings are used to mate the substrate plate to the tray, as shown in Figure 12. Preferably, the o-rings are elastomeric. Any appropriate elastomeric material may be used (e.g., rubber and variants thereof).

Figure 13 pictorially compares the flatness of a borosilicate substrate plate utilized in various embodiments of the present invention. Figure 7 depicts the borosilicate substrate plate mated to a polycarbonate tray surface by using an adhesive. Figure 11 depicts the borosilicate substrate plate mated to a polycarbonate tray surface using 4 corner pins. Figure 12 shows the borosilicate substrate plate mated to an acrylic tray surface using an o-ring. The flatness comparison depicted in Figure 13 demonstrates the range of flatness observed by the various plate-to-tray attachment embodiments and shows how they do not differ significantly from the substrate plate flatness variation. This result demonstrates that the design does not significantly increase the flatness of the substrate plate once assembled in the tray. Confocal scanning systems currently require flatness variations of ≤50 µm due to depth of focus requirements.

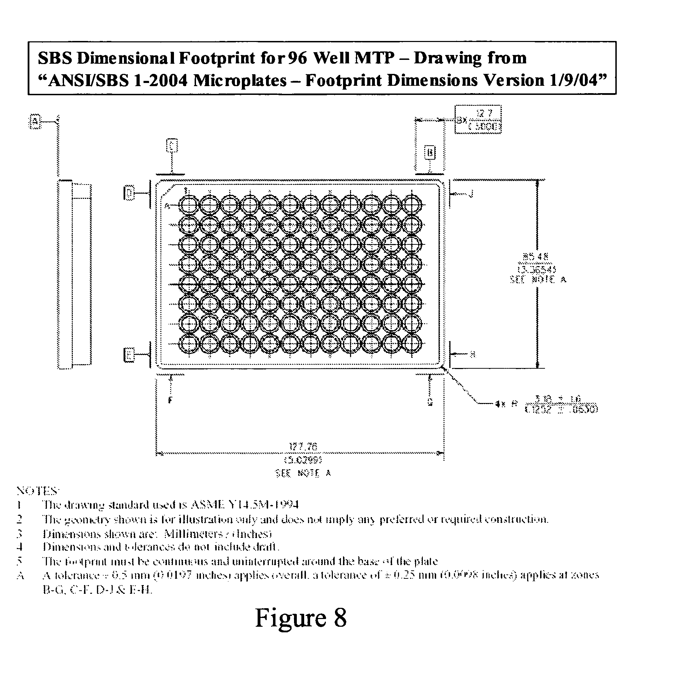

The apparatus shown in Figures 3, 4, 7, 11 and 12 confirm to the SBS standards for microplates as outlined in ANSI/SBS 1-2004 (Microplates - Footprint Dimensions), ANSI/SBS 2-2004 (Microplates - Height Dimensions), ANSI/SBS 3-2004 (Microplates - Bottom Outside Flange Dimensions), and ANSI/SBS 4-2004 (Microplates - Well Position). Figure 8 is a reproduced image of Figure 1 in ANSI/SBS 1-2004 (Microplates - Footprint Dimensions), shown as an example of an SBS conforming 96 well microtiter plate. For some applications of this invention, the apparatus shown in, for example, Figures 3, 4, 7, 11, and 12 may be modified in various ways. For example, certain embodiments may be modified to contain a different number of wells, different shape of wells, different placement of wells, dissimilar well shapes/sizes on same plate, different footprint dimensions, etc. Alternatively, embodiments may be modified to meet design requirements and/or for aesthetics. These modifications may make the resulting apparatus non-conforming with 1 or more of the ANSI/SBS standards. Without departing from the scope of this invention, one skilled in the art may make modifications to the apparatus of this invention that, while non-conforming to 1 or more ANSI/SBS standards, functions compatibly with the liquid handling equipment ANSI/SBS standard microtiter plates are designed to work with.

According to the invention, the adhesive bond is removable. Adhesive "tapes" are a preferred solution, such that an adhesive can be applied to the superstructure, with a peelable release liner material that protects the adhesive until use. The release liner, once removed, exposes the adhesive and allows for bonding of the superstructure to the substrate. The choice of adhesive tape depends on the chosen superstructure material. For a preferred superstructure material, silicone, adhesive tapes that contain a silicone adhesive for bonding to the silicone, a liner, an acrylic adhesive for bonding to the substrate, and a liner (to protect the adhesive until use) are desired. An example of a suitable commercially available adhesive tape is 3M 9731, which is a double coated silicone adhesive tape. It exhibits high adhesion to a variety of substrates. One side of the tape contains a silicon adhesive and the other side contains an acrylic adhesive. Both adhesives are resistant to most solvents and can withstand high temperatures.

The adhesive is selected so as to be compatible with the coated and patterned substrate and the conditions of the assay. The adhesive may be ancillary from wells, as shown in Figures 3 and 4, or can be supported by a tray without adhesive, as shown in Figure 4. Adhesive can also be used with the design in Figure 4 with the further benefit that the adhesive, being on the opposite side of the coated patterned surface, does not come in contact with the solutions used in the microarray protocols. The tray in both figures subsequently serves as an alignment tool for a flexible superstructure to be mated by adhesive to the coated, patterned glass bottom plate. The underside of the flexible superstructure has an adhesive for attachment to the coated, patterned substrate. A buffer or recessed area around each well where no adhesive is present acts to reduce well contamination by the adhesive and compensates in the event of slight misalignment of the superstructure to the glass bottom plate. The buffer area changes as a function of the number of wells. Preferably, adhesive is recessed from about 0.15 to 0.50 mm from the well edge. The minimum amount of adhesive required is >1.00 mm between all wells and pattern edges. This design allows for microarray probes to be printed directly onto the coated patterned substrate before assembly into the tray or afterwards; both options provide for easier and shorter microarray printing times, utilization of entire well area for printing, and minimization of adhesive contamination, when compared to conventional glass bottom microtiter plates. A most preferred embodiment is shown in Figure 4, the design allows for an adhesive to be used on the non-patterned, non-coated side of the bottom plate or no adhesive for the mating of the substrate to the tray. While Figures 3 and 4 depict a matrix of 96 wells, the matrix can be any desired arrangement of multiple wells (48, 192, 384, 1536, etc).

A tray is used to hold the substrate for full compatibility with liquid handling equipment. This tray differs from conventional microtiter plate trays in that this tray functions as a holder for the substrate and an alignment jig for the superstructure. In conventional microtiter plates the tray functions as a holder with the matrix of wells already built in to the tray. The tray designs provide a mating area for the substrate to the tray, with (Figures 3 and 7) or without adhesive (Figures 4, 11-12). The tray has an open central area, which allows the mating and alignment of a superstructure to the substrate. Conventional microtiter plates have the superstructure (matrix of wells) built directly into the tray. In a preferred embodiment the overall tray dimensions are compliant with the industry standard dimensions as established by the Society of Biomolecular Screening (SBS). The standard dimensions can be found, for example, in the Journal of Biomolecular Screening, 1996, Vol 1, #4, 163-168. Updated versions can be found on the society's webpage at http://www.sbsonline.org/msdc/approved.php. The tray can be made from any material that can be machined, cast, or injection molded to the design specifications, such as polystyrene, polypropylene, polyethylene, acrylic, etc. The design tolerances require machining/injection molding accuracy of at least ± 0.25 - 0.50 mm. Thus, the tray enables quick, reliable mating of the superstructure to the patterned coated substrate with or without the use of adhesive.

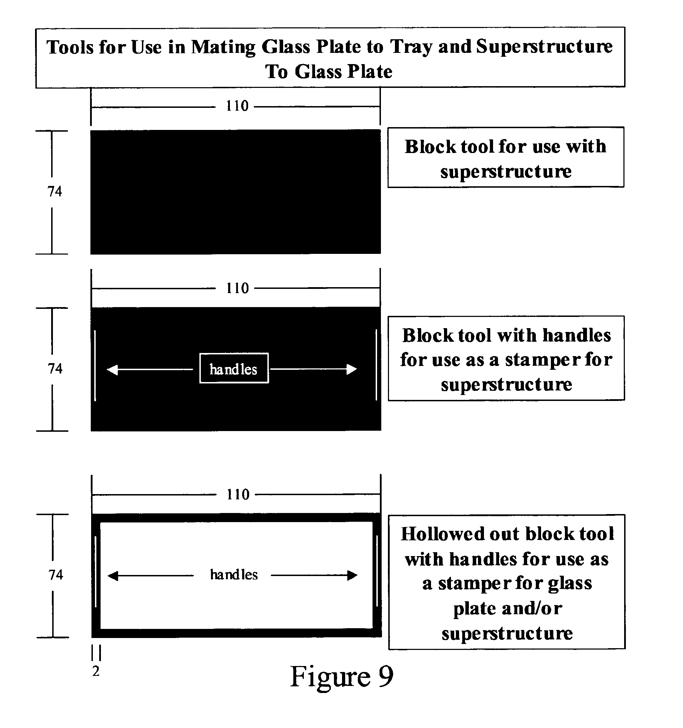

In certain applications an additional component can be used to aid in the mating of the glass substrate to the tray and the superstructure to the glass substrate. Some examples are shown in Figure 9. A tool, spatula, or block may be used to enable even mating or registration of the superstructure to the substrate by applying even force across the superstructure. The apparatus in Figures 3 and 4 could be inverted over the block to allow even force to be applied to the superstructure. The block could be made of the same or similar material as the tray, or a material dissimilar from the tray. Alternatively, the tool or block could be used directly by placing it within the opening of the tray to apply even force across the superstructure. The tool or block concept also extends to mating of the bottom substrate to the tray. For example, in one preferred application, a block of suitable material 74 x 110 mm (and at least 1 mm thick) is machined to remove the inside 70 x 106 mm, leaving a 2 mm perimeter of material, to which handles may be attached, to use in mating the upper face of the bottom substrate to the tray by applying force to the outside 2 mm perimeter of the substrate to mate the substrate to the ledge of a tray of the type shown in Figure 4.

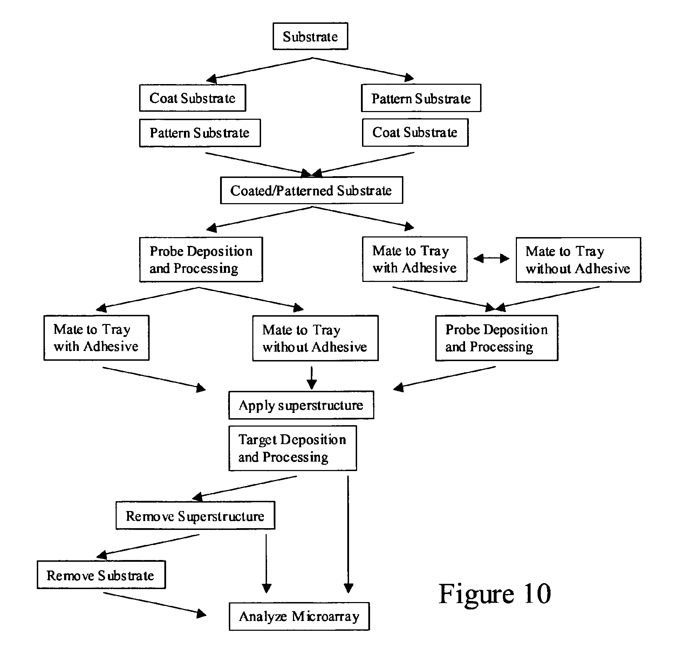

The apparatus disclosed in the invention enable a wide range of flexibility in performing a microarray experiment. This is shown pictorially in Figure 10. Depending on the specific experimental details and/or specific application, one could use the apparatus disclosed in Figures 3, 4, 7, 11, 12 and extensions or variations thereon, to provide an apparatus appropriate to the application.

In the foregoing and in the following examples, all temperatures are set forth uncorrected in degrees Celsius; dimensions are set forth in mm; and, unless otherwise indicated, all parts and percentages are by weight.

### EXAMPLE 1

### REDUCTION OF WELL CONTAMINATION

Figure 2 depicts the elimination of well contamination by reducing the amount of the adhesive on the flexible superstructure around the wells on epoxy silanized patterned glass substrates. A complex hybridization experiment is conducted using a 10 x 10 array of 50mer (rat) probes, and a mixture of cDNA Cy3 labeled kidney and Cy5 labeled liver targets are added to wells 1, 4, 5, 8. As demonstrated, full adhesive around the wells (Figure 2c) leads to reduction in printable well area and well contamination from the adhesive, while reducing the adhesive too much around the wells (Figure 2a) leads to intra-well cross contamination.

The preceding example can be repeated with similar success by substituting the generically or specifically described reactants and/or operating conditions of this invention for those used in the preceding example.

## Claims

1. An apparatus for conducting multiple biomolecular assays comprising:
a) a low self-fluorescent coated substrate having upper and lower surfaces, said upper surface comprising a plurality of hydrophilic wells formed by a hydrophobic patterning material forming hydrophobic boundary regions on the substrate providing separation between the individual hydrophilic wells for conducting said biomolecular assays, and
b) a flexible superstructure removably attached with adhesive on its underside to said substrate upper surface and having a plurality of openings there through which align with said wells on the upper surface of the coated substrate,
wherein the adhesive is present on the underside of the superstructure and the adhesive width is less than that of the well walls.

2. An apparatus according to claim 1, wherein said substrate is glass.

3. An apparatus according to claim 1 or 2, further comprising a tray for supporting the substrate.

4. An apparatus according to claim 3, wherein said upper surface of said substrate is attachable to the support tray with adhesive.

5. An apparatus according to claim 3 or 4, wherein said lower surface of said substrate is attachable to the support tray with adhesive.

6. An apparatus according to claim 3, wherein said lower surface of said substrate is mated to the support tray with pins.

7. An apparatus according to claim 6, wherein said pins are made from the same material as the tray.

8. An apparatus according to claim 6 or 7, wherein the length of said pins is equal to or less than the distance from the upper surface of the tray to the upper surface of the substrate.

9. An apparatus according to claim 3, wherein said substrate is mated to the support tray with o-rings.

10. An apparatus according to claim 9, wherein said o-rings are elastomeric.

11. An apparatus according to claim 3, wherein said support tray has an inside perimeter ledge and the lower surface of the substrate is supportable on said ledge.

12. An apparatus according to claim 11,
wherein said support tray inside perimeter ledge has openings for the injection of adhesive to attach said lower surface of said substrate to the support tray ledge.

13. An apparatus according to claim 3 or 4, wherein said support tray has an inside recess and the upper surface of the substrate is adhesively attachable to said recess.

14. An apparatus according to any one of claims 3 to 13, further comprising a tool or block to enable even mating of the superstructure to the substrate and/or substrate to the tray.

15. An apparatus according to any one of claims 3 to 14, wherein the substrate wells and support tray conform to Society of Biomolecular Screening standard microtiter plate specifications.

16. An apparatus according to any one of claims 1 to 15, wherein the substrate pattern comprises a matrix of 48 to 1536 wells, preferably 96 or 384 wells.

17. A kit for conducting multiple biomolecular assays comprising:
(a) a low self-fluorescent coated substrate having an u per and lower surface, said upper surface comprising a plurality of hydrophilic wells formed by a hydrophobic patterning material forming hydrophobic boundary regions on the substrate providing separation between the individual hydrophilic wells for conducting said biomolecular assays,
(b) a flexible superstructure removably attachable with adhesive on its underside to said substrate upper surface and having a plurality of openings there through which align with said wells on the upper surface of the coated substrate wherein the superstructure contains the adhesive on its underside and the adhesive width is less than that of the well walls.
and
(c) a tray for supporting the substrate,
wherein a fluid tight reaction chamber is formed above said wells that allows increased well fluid volume.

18. A kit according to claim 17, wherein said adhesive is covered with a removable release liner.

19. A kit according to claim 17 or 18, wherein said adhesive is recessed on the flexible superstructure from about 0.15 mm to 0.50 mm away from the edges of all well openings.

20. A kit according to any one of claims 17 to 19 wherein the kit further comprises a cover for covering the upper surface of the superstructure.

21. A kit according to any one of claims 17 to 20, wherein said support tray has an inside perimeter ledge and the substrate is supportable on said ledge.

22. A kit according to claim 21,
wherein said support tray inside perimeter ledge has openings for the injection of adhesive to attach said lower surface of said substrate to the support tray ledge.

23. A kit according to any one of claims 17 to 20, wherein said support tray has an inside recess and the substrate is adhesively attachable to said recess.

24. A kit according to any one of claims 17 to 23, further comprising a tool or block to enable even mating of the superstructure to the substrate and/or the substrate to the tray.

25. A kit according to any one of claims 17 to 24, wherein the substrate wells and support tray conform to the Society of Biomolecular Screening standard microtiter plate dimensions.

26. A kit according to any of claims 17 to 25, wherein the substrate pattern comprises a matrix of 48 to 1536 wells, preferably 96 or 384 wells.

27. A method of conducting biomolecular assays comprising conducting a hybridization experiment using an apparatus according to any one of claims 1 to 16 or a kit according to any one of claims 17 to 26 comprising DNA probes.

## Patentansprüche

1. Vorrichtung zur Durchführung einer Mehrzahl von biomolekularen Tests, umfassend:
a) einen beschichteten Träger mit geringer Eigenfluoreszenz mit oberen und unteren Oberflächen, wobei die obere Oberfläche eine Vielzahl von hydrophilen Vertiefungen aufweist, die von einem hydrophoben Muster-bildenden Material ausgebildet werden, das hydrophobe Grenzbereiche auf dem Träger bereitstellt, wodurch eine Trennung zwischen den einzelnen hydrophilen Vertiefungen zur Durchführung der biomolekularen Tests bewirkt wird, und
b) eine flexible Superstruktur, die abnehmbar mit Klebstoff auf ihrer Unterseite auf der oberen Oberfläche des Trägers befestigt ist und eine Vielzahl von Öffnungen aufweist, die an die Vertiefungen auf der oberen Oberfläche des beschichteten Trägers angeglichen sind, wobei sich der Klebstoff auf der Unterseite der Superstruktur befindet und die Ausdehnung des Klebstoffs geringer ist als die der Wände um die Vertiefungen.

2. Vorrichtung nach Anspruch 1, wobei der Träger Glas ist.

3. Vorrichtung nach Anspruch 1 oder 2, die außerdem eine Aufnahmevorrichtung zum Stützen des Trägers aufweist.

4. Vorrichtung nach Anspruch 3, wobei die obere Oberfläche des Trägers mit Klebstoff auf der stützenden Aufnahmevorrichtung befestigt werden kann.

5. Vorrichtung nach Anspruch 3 oder 4, wobei die untere Oberfläche des Trägers mit Klebstoff auf der stützenden Aufnahmevorrichtung befestigt werden kann.

6. Vorrichtung nach Anspruch 3, wobei die untere Oberfläche des Trägers mit Stiften mit der stützenden Aufnahmevorrichtung verbunden wird.

7. Vorrichtung nach Anspruch 6, wobei die Stifte aus demselben Material hergestellt sind wie die Aufnahmevorrichtung.

8. Vorrichtung nach Anspruch 6 oder 7, wobei die Länge der Stifte dem Abstand von der oberen Oberfläche der Aufnahmevorrichtung zur oberen Oberfläche des Trägers entspricht oder geringer als diese ist.

9. Vorrichtung nach Anspruch 3, wobei der Träger mit Dichtungsringen mit der stützenden Aufnahmevorrichtung verbunden wird.

10. Vorrichtung nach Anspruch 9, wobei die Dichtungsringe elastomer sind.

11. Vorrichtung nach Anspruch 3, wobei die stützende Aufnahmevorrichtung auf der Innenseite eine umlaufende Kante aufweist und die untere Oberfläche des Trägers auf der Kante abgestützt werden kann.

12. Vorrichtung nach Anspruch 11, wobei die umlaufende Kante, die sich auf der Innenseite der stützenden Aufnahmevorrichtung befindet, Öffnungen für die Einspritzung von Klebstoff aufweist, um die untere Oberfläche des Trägers an der Kante der stützenden Aufnahmevorrichtung zu befestigen.

13. Vorrichtung nach Anspruch 3 oder 4, wobei die stützende Aufnahmevorrichtung eine innere Aussparung aufweist und die obere Oberfläche des Trägers in dieser Aussparung mit Klebstoff befestigbar ist.

14. Vorrichtung nach einem der Ansprüche 3 bis 13, das außerdem ein Mittel oder einen Block aufweist, um eine bündige Verbindung der Superstruktur mit dem Träger und/oder des Trägers mit der Aufnahmevorrichtung zu ermöglichen.

15. Vorrichtung nach einem der Ansprüche 3 bis 14, wobei die Vertiefungen auf dem Träger und die stützende Aufnahmevorrichtung den Anforderungen der Society for Biomolecular Screening für eine Standardmikrotiterplatte entsprechen.

16. Vorrichtung nach einem der Ansprüche 1 bis 15, wobei das Muster auf dem Träger eine Matrix aus 48 bis 1536 Vertiefungen, vorzugsweise 96 oder 384 Vertiefungen aufweist.

17. Kit zur Durchführung einer Mehrzahl von biomolekularen Tests, umfassend:
a) einen beschichteten Träger mit geringer Eigenfluoreszenz mit einer oberen und unteren Oberfläche, wobei die obere Oberfläche eine Vielzahl von hydrophilen Vertiefungen aufweist, die von einem hydrophoben Muster-bildenden Material ausgebildet werden, das hydrophobe Grenzbereiche auf dem Träger bereitstellt, wodurch eine Trennung zwischen den einzelnen hydrophilen Vertiefungen zur Ausführung der biomolekularen Tests bewirkt wird, und
b) eine flexible Superstruktur, die abnehmbar mit Klebstoff auf ihrer Unterseite auf der oberen Oberfläche des Trägers befestigbar ist und eine Vielzahl von Öffnungen aufweist, die an die Vertiefungen auf der oberen Oberfläche des beschichteten Trägers angeglichen sind, wobei die Superstruktur den Klebstoff auf ihrer Unterseite aufweist und die Ausdehnung des Klebstoffs geringer ist als die der Wände um die Vertiefungen, und
c) eine Aufnahmevorrichtung zum Stützen des Trägers,
wobei eine Fluid-dichte Reaktionskammer über den Vertiefungen gebildet wird, die ein erhöhtes Fluidvolumen in den Vertiefungen ermöglicht.

18. Kit nach Anspruch 17, wobei der Klebstoff mit einer abziehbaren Abdeckfolie bedeckt ist.

19. Kit nach Anspruch 17 oder 18, wobei der Klebstoff auf der flexiblen Superstruktur zwischen 0,15 mm und 0,50 mm von den Rändern der Vertiefungen entfernt aufgetragen ist.

20. Kit nach einem der Ansprüche 17 bis 19, wobei das Kit außerdem eine Abdeckung zum Abdecken der oberen Oberfläche der Aufbaustruktur umfasst.

21. Kit nach einem der Ansprüche 17 bis 20, wobei die stützende Aufnahmevorrichtung auf der Innenseite eine umlaufende Kante aufweist und der Träger auf der Kante abstützbar ist.

22. Kit nach Anspruch 21, wobei die umlaufende Kante, die sich auf der Innenseite der stützenden Aufnahmevorrichtung befindet, Öffnungen für die Einspritzung von Klebstoff aufweist, um die untere Oberfläche des Trägers an der Kante der stützenden Aufnahmevorrichtung zu befestigen.

23. Kit nach einem der Ansprüche 17 bis 20, wobei die stützende Aufnahmevorrichtung eine innere Aussparung aufweist und der Träger in dieser Aussparung mit Klebstoff befestigbar ist.

24. Kit nach einem der Ansprüche 17 bis 23, das außerdem ein Mittel oder einen Block aufweist, um eine bündige Verbindung der Superstruktur mit dem Träger und/oder des Trägers mit der Aufnahmevorrichtung zu ermöglichen.

25. Kit nach einem der Ansprüche 17 bis 24, wobei die Vertiefungen des Trägers und die stützende Aufnahmevorrichtung den Maßen von Standardmikrotiterplatten gemäß der Society for Biomolecular Screening entsprechen.

26. Kit nach einem der Ansprüche 17 bis 25, wobei das Muster auf dem Träger eine Matrix aus 48 bis 1536 Vertiefungen, vorzugsweise 96 oder 384 Vertiefungen aufweist.

27. Verfahren der Durchführung biomolekularer Tests, das die Durchführung eines Hybridisierungsexperiments unter Verwendung einer Vorrichtung nach einem der Ansprüche 1 bis 16 oder eines Kits nach einem der Ansprüche 17 bis 26, die bzw. das DNA-Sonden enthält, umfasst.

## Revendications

1. Appareil pour mettre en oeuvre des essais biomoléculaires multiples comprenant :
a) un substrat revêtu faiblement auto-fluorescent ayant des surfaces supérieure et inférieure, ladite surface supérieure comprenant une pluralité de puits hydrophiles formés par un matériau de texturation hydrophobe formant des régions de limites hydrophobes sur le substrat qui créent une séparation entre les puits hydrophiles individuels pour mettre en oeuvre lesdits essais biomoléculaires ; et
b) une superstructure flexible fixée de manière amovible à ladite surface supérieure du substrat à l'aide d'un adhésif présent sur sa surface inférieure et comportant une pluralité d'ouvertures débouchantes qui s'alignent avec lesdits puits sur la surface supérieure du substrat revêtu,
dans lequel l'adhésif est présent sur la surface inférieure de la superstructure et la largeur de l'adhésif est inférieure à celle des parois de puits.

2. Appareil selon la revendication 1, dans lequel ledit substrat est du verre.

3. Appareil selon les revendications 1 ou 2 comprenant, en outre, un plateau pour supporter le substrat.

4. Appareil selon la revendication 3, dans lequel ladite surface supérieure dudit substrat peut être fixée au plateau de support avec un adhésif.

5. Appareil selon les revendications 3 ou 4, dans lequel ladite surface inférieure dudit substrat peut être fixée au plateau de support avec un adhésif.

6. Appareil selon la revendication 3, dans lequel ladite surface inférieure dudit substrat est accouplée au plateau de support à l'aide de broches.

7. Appareil selon la revendication 6, dans lequel lesdites broches sont faites du même matériau que le plateau.

8. Appareil selon les revendications 6 ou 7, dans lequel la longueur desdites broches est égale ou inférieure à la distance de la surface supérieure du plateau à la surface supérieure du substrat.

9. Appareil selon la revendication 3, dans lequel ledit substrat est accouplé au plateau de support à l'aide de joints toriques.

10. Appareil selon la revendication 9, dans lequel lesdits joints toriques sont élastomères.

11. Appareil selon la revendication 3, dans lequel ledit plateau de support comporte un rebord de périmètre intérieur et la surface inférieure du substrat peut être supportée sur ledit rebord.

12. Appareil selon la revendication 11, dans lequel ledit rebord de périmètre intérieur du plateau de support comporte des ouvertures pour l'injection de l'adhésif destiné à coller ladite surface inférieure dudit substrat au rebord du plateau de support.

13. Appareil selon les revendications 3 ou 4, dans lequel ledit plateau de support comporte un évidement intérieur et la surface supérieure du substrat est fixée de manière adhésive audit évidement.

14. Appareil selon l'une quelconque des revendications 3 à 13 comprenant, en outre, un outil ou un bloc pour permettre l'accouplement uniforme de la superstructure au substrat et/ou du substrat au plateau.

15. Appareil selon l'une quelconque des revendications 3 à 14, dans lequel les puits du substrat et le plateau de support satisfont les spécifications standards des plaques de microtitrage de la SBS (Society of Biomolecular Screening).

16. Appareil selon l'une quelconque des revendications 1 à 15, dans lequel le motif du substrat comprend une matrice de 48 à 1536 puits, de préférence, de 96 ou 384 puits.

17. Kit pour mettre en oeuvre des assais biomoléculaires multiples comprenant :
a) un substrat revêtu faiblement auto-fluorescent ayant des surfaces supérieure et inférieure, ladite surface supérieure comprenant une pluralité de puits hydrophiles formés par un matériau de texturation hydrophobe formant des régions de limites hydrophobes sur le substrat qui créent une séparation entre les puits hydrophiles individuels pour mettre en oeuvre lesdits essais biomoléculaires ;
b) une superstructure flexible pouvant être fixée de manière amovible à ladite surface supérieure du substrat à l'aide d'un adhésif présent sur sa surface inférieure et comportant une pluralité d'ouvertures débouchantes qui s'alignent avec lesdits puits sur la surface supérieure du substrat revêtu, dans lequel la superstructure contient l'adhésif sur sa surface inférieure et la largeur de l'adhésif est inférieure à celle des parois de puits, et
c) un plateau pour supporter le substrat,
dans lequel une chambre de réaction étanche aux fluides est formée au-dessus desdits puits qui permet un volume de fluide accru dans les puits.

18. Kit selon la revendication 17, dans lequel ledit adhésif est recouvert d'une feuille anti-adhésive amovible.

19. Kit selon les revendications 17 ou 18, dans lequel ledit adhésif est en retrait sur la superstructure flexible d'environ 0,15 à 0,50 mm par rapport aux bords de toutes les ouvertures de puits.

20. Kit selon l'une quelconque des revendications 17 à 19, dans lequel le kit comprend, en outre, un couvercle pour couvrir la surface supérieure de la superstructure.

21. Kit selon l'une quelconque des revendications 17 à 20, dans lequel ledit plateau de support comporte un rebord de périmètre intérieur et le substrat peut être supporté sur ledit rebord.

22. Kit selon la revendication 21, dans lequel ledit rebord de périmètre intérieur du plateau de support comporte des ouvertures pour l'injection de l'adhésif destiné à coller ladite surface inférieure dudit substrat au rebord du plateau de support.

23. Kit selon l'une quelconque des revendications 17 à 20, dans lequel ledit plateau de support comporte un évidement intérieur et le substrat peut être fixé de manière adhésive audit évidement.

24. Kit selon l'une quelconque des revendications 17 à 23 comprenant, en outre, un outil ou un bloc pour permettre l'accouplement uniforme de la superstructure au substrat et/ou du substrat au plateau.

25. Kit selon l'une quelconque des revendications 17 à 24, dans lequel les puits du substrat et le plateau de support satisfont les dimensions standards des plaques de microtitrage de la SBS (Society of Biomolecular Screening).

26. Kit selon l'une quelconque des revendications 17 à 25, dans lequel le motif du substrat comprend une matrice de 48 à 1536 puits, de préférence, de 96 ou 384 puits.

27. Procédé de mise en oeuvre d'essais biomoléculaires comprenant la mise en oeuvre d'une expérience d'hybridation à l'aide d'un appareil selon l'une quelconque des revendications 1 à 16 ou d'un kit selon l'une quelconque des revendications 17 à 26 comprenant des sondes d'ADN.
